# EUROPÄISCHE PATENTSCHRIFT

(11) **EP 1 692 476 B1**
(45) Veröffentlichungstag und Bekanntmachung des Hinweises auf die Patenterteilung: **09.04.2008**
(21) Anmeldenummer: 04803757.6
(22) Anmeldetag: 10.12.2004
(51) Int. Cl.: G01K 7/16

(54) **BAUELEMENT UND VERFAHREN ZU DESSEN HERSTELLUNG**
COMPONENT, AND METHOD FOR THE PRODUCTION THEREOF
COMPOSANT ET SON PROCEDE DE FABRICATION

(30) Priorität: 12.12.2003 DE 10358282
(43) Veröffentlichungstag der Anmeldung: 23.08.2006
(73) Patentinhaber: Zitzmann, Heinrich, 91207 Lauf an der Pegnitz (DE); Bernitz, Georg, 90441 Nürnberg (DE)
(72) Erfinder: ZITZMANN,Heinrich, 91207 Lauf an der Pegnitz (DE); BERNITZ,Georg, 90441 Nümberg (DE)
(74) Vertreter: Zimmermann, Tankred Klaus
(86) Internationale Anmeldenummer: PCT/EP2004/014115
(87) Internationale Veröffentlichungsnummer: WO 2005/057150

(56) Entgegenhaltungen:
- EP-A- 0 060 427
- US-A- 6 151 771

## Beschreibung

Die vorliegende Erfindung bezieht sich auf ein Bauelement und auf ein Verfahren zu dessen Herstellung, und hier insbesondere auf ein Bauelement mit Anschlussflächen, welche eine gute Kontaktierung mit Anschlussdrähten erlauben.

Im Stand der Technik geht die Tendenz dazu, Bauteile und elektrische Schaltungen immer weiter zu verkleinern bzw. zu miniaturisieren, so dass beispielsweise auf einem einzigen Wafer oder Substrat eine Vielzahl von Bauteilen in hoher Dichte hergestellt werden, die anschließend zur Weiterverwendung vereinzelt werden.

Der Vorteil dieser Miniaturisierung besteht darin, dass zum einen der durch die Bauteile eingenommene Platz in anderen Komponenten reduziert werden kann und, was ebenfalls sehr wesentlich ist, eine Vielzahl von solchen Bauteilen in einem einzelnen Substrat herstellbar sind, so dass die zur Herstellung erforderlichen Ressourcen immer optimaler ausgenutzt werden. Aus einem Substrat erhält man nunmehr eine Vielzahl von Bauteilen, so dass durch Einsatz der gleichen Menge an Material eine erhöhte Ausbeute erhalten werden kann, so dass die Gesamtkosten für jedes einzelne Bauteil sich reduzieren, im Hinblick auf das verwendete Substratmaterial entsprechend dem durch das Bauteil eingenommenen Platz.

Ein Problem, das bei dieser fortschreitenden Miniaturisierung angetroffen wird, besteht darin, dass im gleichen Maße, in dem das Bauelement schrumpft auch die zur Verfügung stehenden Kontaktflächen zum Anschluss des Bauelements kleiner werden. Beispielsweise gewährt die verfügbare Kontaktfläche bei derart miniaturisierten Bauelementen zur Verbindung mit Anschlussdrähten oder anderen Anschlussstellen keine ausreichende mechanische Festigkeit, so dass sich eine reduzierte Anschlusszuverlässigkeit ergibt, insbesondere dann, wenn Anschlussdrähte verwendet werden.

Ein Beispiel zur Lösung dieser Problematik wird in der nachveröffentlichten deutschen Patentanmeldung DE 103 56 367 A beschrieben, bei der kleine Bauteile in ein Trägerelement derart eingebracht sind, dass deren gegenüberliegende Anschlussflächen auf einer Oberseite bzw. Unterseite des Trägers angeordnet sind, die ihrerseits mit einer leitfähigen Schicht bedeckt sind, so dass sich eine Vergrößerung der wirksamen Anschlussfläche ergibt. Diese Vorgehensweise ist für solche Bauteile vorteilhaft, bei denen die Bauteile Kontaktflächen aufweisen, die sich über die Seitenflächen derselben erstrecken, so dass bei einer vertikalen Anordnung derselben in einer Ausnehmung des Trägers die entsprechenden Anschlussflächen der Oberseite und der Unterseite des Trägers zugewandt sind. Diese Vorgehensweise zur Vergrößerung der Kontaktanschlussfläche ist jedoch für Bauteile, bei denen die Kontaktbereiche auf einer gemeinsamen Oberfläche angeordnet sind, nicht geeignet.

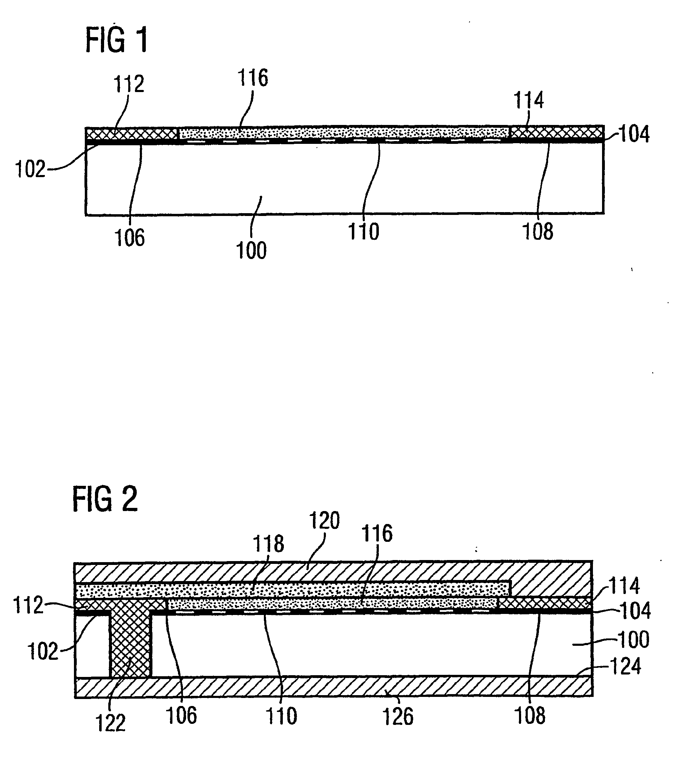

Anhand der Fig. 1 ist ein solches herkömmliches Bauteil näher beschrieben, welches beispielsweise ein Sensor-Chip ist. Dieses Bauteil umfaßt ein Substrat 100, beispielsweise ein Keramiksubstrat. Auf einer oberen Oberfläche 102 des Keramiksubstrats 100 ist eine Metallschicht 104, beispielsweise ein Platinfilm gebildet. Der Sensor-Chip umfaßt einen ersten Kontaktbereich 106 sowie einen zweiten Kontaktbereich 108, zwischen denen ein strukturierter Platinfilm 110, z.B. mäanderförmig, angeordnet ist. Auf den Kontaktflächen 106 und 108 sind jeweils Kontaktverstärkungen 112 und 114 aus einem leitfähigen Material angeordnet. Bei dem in Fig. 1 gezeigten Beispiel eines herkömmlichen Temperaturmesssensors ist der Messfilm 110 durch eine Glasurschicht 116 geschützt, die zwischen den Kontaktverstärkungen 112 und 114 angeordnet ist.

Wie zu erkennen ist, sind die Kontaktflächen 112, 114 verglichen mit der Gesamtabmessung des Elements recht klein, und mit zunehmender Miniaturisierung des Gesamtelements, reduziert sich auch hier die verfügbare Kontaktfläche zum Anschluss an Anschlussdrähte oder ähnliches, so dass es hier zu den oben erwähnten Problemen im Zusammenhang mit der Qualität der Anschlussverbindung kommt.

Ausgehend von diesem Stand der Technik liegt der vorliegenden Erfindung die Aufgabe zugrunde, ein verbessertes Verfahren zum Herstellen eines Bauelements mit gegenüberliegenden Anschlussflächen sowie ein solches Bauelement zu schaffen, bei dem eine verbesserte Qualität der Anschlussverbindung erreicht wird.

Diese Aufgabe wird durch ein Verfahren nach Anspruch 1 oder 7 sowie durch ein Bauelement nach Anspruch 11 oder 13 gelöst.

EP 0 060 427 offenbart weiter einen Temperatursensor, mit einem strukturierten Messfilm, der auf einer isolierenden Schicht ausgebildet ist. Die isolierende Schicht befindet sich auf einem niederohmigen (d.h. leitfähigen) Substrat. Der strukturierte Messfilm ist zwischen zwei Kontakten angeordnet. Der erste Kontakt ist mit dem leitfähigen Substrat verbunden und der zweite Kontakt ist mit einer oberen leitfähigen Schicht verbunden. Auf der Unterseite des Substrats ist eine untere leitfähige Schicht angeordnet, die somit mit dem ersten Kontakt elektrisch verbunden ist (mittels des leitfähigen Substrats). Der Temperatursensor kann mittels der oberen und unteren leitfähigen Schichten mit Anschlussdrähten verbunden werden.

Gemäß einem bevorzugten Ausführungsbeispiel der vorliegenden Erfindung wird zusätzlich eine zweite leitfähige Schicht als zweite Anschlussfläche des Bauelements auf der ersten Oberfläche des Bauteils derart erzeugt, dass dieselbe mit dem zweiten Kontakt auf der ersten Oberfläche des Bauteils in Kontakt ist.

Die leitfähige Verbindung wird gemäß einem ersten Ausführungsbeispiel durch eine Durchkontaktierung in dem Bauteil, die sich von dem ersten Kontakt zu der zweiten Oberfläche des Bauteils erstreckt gebildet, wobei diese entweder nach Fertigprozessierung des Bauteils durch Einbringen eines Loches oder vor der Prozessierung des Bauteilträgers erreicht wird, indem dann im Bereich des zu bildenden ersten Kontakts die Durchkontaktierung erzeugt wird und anschließend die Kontakte sowie die elektrische Schaltung erzeugt werden.

Alternativ kann die leitfähige Verbindung durch eine leitfähige Schicht gebildet werden, die sich von dem ersten Kontaktbereich über eine Seitenfläche des Bauteils auf die zweite Oberfläche erstreckt.

Gemäß einem weiteren bevorzugten Ausführungsbeispiel der vorliegenden Erfindung wird die zweite leitfähige Schicht dadurch gebildet, dass eine isolierende Schicht auf der ersten Oberfläche abgeschieden wird, so dass nur noch der zweite Kontakt freiliegt, der dann durch die auf der ersten Oberfläche erzeugten leitfähigen Schicht in Kontakt genommen wird.

Alternativ zu dieser Vorgehensweise kann gemäß einem anderen Ausführungsbeispiel vorgesehen sein, ein isolierendes Plättchen vorzusehen, dessen Abmessungen im wesentlichen mit denen des Bauteils übereinstimmen und dessen erste, vom Bauteil abgewandte Oberfläche mit einer leitfähigen Schicht versehen ist. Die zweite, dem Bauteil zugewandte Oberfläche ist nur in einem vorbestimmten Bereich mit einer leitfähigen Schicht versehen, und zwar dort, wo derselbe den zweiten Kontakt kontaktieren soll. Über eine Durchkontaktierung ist der leitfähige Abschnitt und die leitfähige Schicht auf den zwei Oberflächen des Plättchens miteinander verbunden, und zur Erzeugung der zweiten Anschlussfläche des Bauelements wird das Plättchen auf die erste Oberfläche derart aufgebracht, dass der leitfähige Abschnitt mit dem zweiten Kontakt in Verbindung ist.

Gemäß einem weiteren bevorzugten Ausführungsbeispiel der vorliegenden Erfindung werden Zuleitungen, z.B. in der Form von Anschlussdrähten, mit den zwei Anschlussflächen verbunden, und optional kann eine weitergehende Umhüllung des Bauteils mit den daran befestigten Anschlussdrähten vorgesehen sein, wobei die Anschlussdrähte im Fall einer Hochtemperaturanwendung angeschweißt werden und die Umhüllung eine Glasur ist. Bei Anwendungen in einem niedrigeren Temperaturbereich können die Anschlussdrähte auch angelötet werden und die Umhüllung durch ein Harz gebildet werden.

Bevorzugte Weiterbildungen der vorliegenden Erfindung sind in den abhängigen Ansprüchen definiert.

Nachfolgend werden bevorzugte Ausführungsbeispiele der vorliegenden Erfindung näher anhand der beiliegenden Zeichnungen erläutert. Es zeigen:
- Fig. 1: ein herkömmliches Sensorbauelement gemäß dem Stand der Technik;
- Fig. 2: ein Bauelement gemäß einem ersten bevorzugten Ausführungsbeispiel der vorliegenden Erfindung;
- Fig. 3: ein Bauelement gemäß einem bevorzugten Ausführungsbeispiel der vorliegenden Erfindung;
- Fig. 4: ein Bauelement gemäß der vorliegenden Erfindung gemäß einem dritten Ausführungsbeispiel;
- Fig. 5: das erfindungsgemäße Bauelement mit aufgebrachter Lötmaterialschicht;
- Fig. 6: ein erfindungsgemäßes Bauelement mit daran angebrachten Anschlussdrähten;
- Fig. 7: das in Fig. 7 gezeigte Beispiel mit einer zusätzlichen Umhüllung;
- Fig. 8: ein Bauelement gemäß der vorliegenden Erfindung gemäß einem vierten Ausführungsbeispiel; und
- Fig. 9: eine isometrische Darstellung des Bauelements aus Fig. 8.

Im Rahmen der nachfolgenden Beschreibung der bevorzugten Ausführungsbeispiele der vorliegenden Erfindung wird darauf hingewiesen, dass in den verschiedenen Zeichnungen gleiche oder gleichwirkende Elemente mit gleichen Bezugszeichen versehen sind.

Ausgehend von einem bekannten Sensor-Chip, wie er beispielsweise für Temperatursensoren, Heizelemente und ähnliches verwendet wird, und wie er näher anhand der Fig. 1 beschrieben wurde, werden gemäß der vorliegenden Erfindung die nachfolgend näher erläuterten Modifizierungen vorgenommen. Aus Wirtschaftlichkeitsgründen wird hier als Ausgangspunkt ein Substrat oder Wafer verwendet, welches eine Vielzahl von Einzelsensoren (Nutzen) aufweist. Neben den in der nachfolgenden Beschreibung verwendeten Beispiele eines Platintemperatur-Sensorelements können auch andere auf Metallfilmen basierende Sensoren, wie z.B. Nickel, Molybdän, Wolfram oder andere Bauelemente mit einer ähnlichen Konfiguration betreffend die Anordnung der Kontakte 106 und 108 auf einer gemeinsamen Oberfläche 102 verwendet werden. Ferner sei an dieser Stelle darauf hingewiesen, dass die vorliegende Erfindung nicht auf solche Bauelemente beschränkt ist, bei denen die elektrische Schaltung in Form eines speziell strukturierten Metallfilms gebildet ist. Vielmehr kann die elektrische Schaltung 110 auch durch in dem Substrat 100 gebildete Bauelemente gebildet sein, bei denen lediglich die Kontakte 106 und 108 an die Oberfläche 102 herausgeführt sind.

Fig. 2 zeigt ein erstes Ausführungsbeispiel des erfindungsgemäßen Bauelements, wobei hier die aus der Fig. 1 bekannten Elemente mit den gleichen Bezugszeichen versehen sind. Auf der Glasur 116 und auf der Verstärkung 112 des ersten Kontakts 106 ist eine isolierende Schicht 118 angeordnet, die im wesentlichen die gesamte freiliegende obere Oberfläche des in Fig. 1 gezeigten Sensorelements bedeckt, mit Ausnahme eines Teils der Verstärkung 114 der zweiten Kontaktfläche 108. Auf die so gebildete Oberfläche ist eine leitfähige Schicht 120 abgeschieden, die die isolierende Schicht 118 sowie den freiliegenden Bereich der Kontaktverstärkung 114 des zweiten Kontakts 108 bedeckt. Ferner ist in dem Substrat 100 eine Durchkontaktierung 122 gebildet, beispielsweise durch ein mit einem leitfähigen Material gefülltes Loch. Die Durchkontaktierung 122 erstreckt sich von dem ersten Kontakt 106 auf der ersten Oberfläche 102 zu einer zweiten Oberfläche 124 des Substrats 100. Auf dieser zweiten Oberfläche 124 ist eine weitere elektrisch leitfähige Schicht 126 gebildet, die die untere Oberfläche 124 des Substrats 100 im wesentlichen vollständig bedeckt und die über die Durchkontaktierung 122 mit dem ersten Kontakt 106 des Sensorbauelements in Kontakt ist.

Bei dem in Fig. 2 dargestellten Ausführungsbeispiel wird somit an dem Sensor-Chip, welcher auf der einen Oberfläche 102 die gegenüberliegenden Kontakte 106/112 und 108/114 aufweist an dem Kontakt 106/112 ein kleines Loch durch das Substrat 100 für die Durchkontaktierung 122 zur Rückseite 124 erzeugt. Vorzugsweise wird dies in einem Prozess-Schritt für alle Sensoren eines Wafers durchgeführt oder bereits am "nackten" Substrat, also bevor mit den anderen Prozess-Schritten zur Sensorherstellung (z.B. Metallfilmabscheidung etc.) begonnen wird, in dem an den Stellen im Substrat, an denen später der Kontakt 106/112 des Chips erzeugt werden soll, entsprechende Bohrungen eingebracht werden, beispielsweise durch Laserbearbeitung oder Stanzen oder ähnlichem.

In einem weiteren Prozess-Schritt wird dann dieses Loch zur Durchkontaktierung 122, z.B. indem mittels des Siebdruckverfahrens eine Metallpaste aufgebracht wird, was gleichzeitig zu den in Fig. 2 gezeigten Kontaktzonenverstärkungen 112, 114 führt. Anschließend wird vorzugsweise die gesamte Fläche oder die für die spätere Weiterverarbeitung wesentliche Fläche der Substratrückseite 124 metallisiert, wobei neben der Siebdrucktechnik auch andere Beschichtungstechniken (z.B. Bedampfen, Sputtern, chemische Beschichtung bzw. Kombinationen dieser Verfahren) angewendet werden können. Zur Metallisierung können sämtliche geeigneten Metalle bzw. Metallpasten verwendet werden, wobei hier lediglich beispielhaft Ag, Au, Pt, Ni, Cu, W etc. sowie deren Legierungen genannt seien. Ferner können Schichtkombinationen aus den genannten Materialien verwendet werden.

Im nächsten Schritt wird über die Kontaktfläche 106/112, an der die Durchkontaktierung 122 zur Rückseite 124 vorgenommen wurde, die Isolationsschicht 118, beispielsweise eine Dielektrikumsschicht, aufgebracht. Diese Schicht kann z.B. in einem Dickschichtprozess mittels Dielektrikumspaste aufgebracht werden, wobei auch die aktive Sensorzone, die vorzugsweise schon mit der Glasur 116 oder einer anderen geeigneten Schutzabdeckung bedeckt sein kann, überdeckt werden kann. Die zweite Kontaktfläche 108/114 wird zumindest nicht vollständig bedeckt. Die Isolationsschicht kann beispielsweise eine Glasur ähnlich der Glasur 116 sein. Es können jedoch andere geeignete Materialen zum Aufbau der Schicht 118 herangezogen werden, z.B. eine Glaskeramik, Keramik oder Kombinationen dieser Materialien. Ferner kann die Schicht 118 aus mehreren gleichen oder unterschiedlichen Lagen zusammengesetzt sein, wodurch sich die Isolationsfestigkeit der Schicht 118 erhöhen lässt.

In einem nachfolgenden Schritt wird die gesamte Oberfläche der aufgebrachten Isolationsschicht 118 oder zumindest ein wesentlicher Teil derselben, mit der Metallisierungsschicht 120 versehen, wobei diese Metallisierungsschicht 120 insbesondere auch die Kontaktzone 108/114, die keine Durchkontaktierung zur Substratrückseite 124 aufweist, bedeckt und elektrisch verbindet. Hierdurch ergibt sich eine leitfähige Schicht mit einer größeren Abmessung als die Kontakte, so dass Anschlussdrähte mit erhöhter Zuverlässigkeit befestigt werden können.

Gemäß einem bevorzugten Ausführungsbeispiel der vorliegenden Erfindung findet die oben anhand der Fig. 2 beschriebene Herstellung der Bauelemente auf Waferebene statt, d.h., auf einem Wafer befinden sich bereits eine Mehrzahl von vorzugsweise baugleichen Bauteilen, die eine bestimmte Abmessung voneinander aufweisen. Um die prozessierten Bauelemente, wie sie sich nach den Schritten gemäß Fig. 2 ergeben, in Einzelbauelemente teilen zu können, sind bei einer Anordnung auf einem Wafer im Randbereich des Substrats 100 kleinere Flächenbereiche freigehalten, in denen Markierungen vorhanden sind, welche zum Vereinzeln des Wafers in Einzelbauteile herangezogen werden.

Die oben beschriebene Metallisierung 120 kann vorzugsweise wieder durch einen Dickschichtprozess aufgebracht werden, jedoch können auch die anderen, oben genannten Verfahren herangezogen werden.

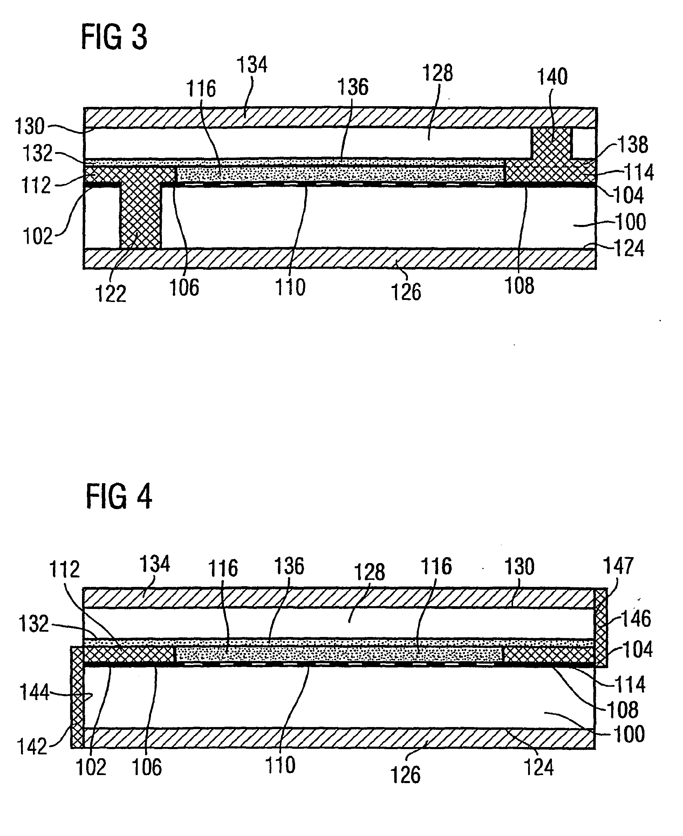

Nachfolgend wird anhand der Fig. 3 ein weiteres bevorzugtes Ausführungsbeispiel der vorliegenden Erfindung näher erläutert. Verglichen mit Fig. 2 wird hier bei der Aufbringung der Anschlussfläche auf der Vorderseite des Substrats 100 der dort beschriebene Ansatz der Aufbringung einer Isolationsschicht 118 und einer leitfähigen Schicht 120 verlassen. Statt dessen wird ein isolierendes Plättchen 128, vorzugsweise ein Keramikplättchen, verwendet, das eine Fläche hat, die in etwa einer Fläche der Oberfläche des Bauteils, an dem dasselbe zu befestigen ist, aufweist. Das Keramikplättchen 128 umfaßt eine erste Oberfläche 130 sowie eine zweite Oberfläche 132. Auf der ersten Oberfläche 130 ist im wesentlichen über die gesamte Oberfläche des Plättchens 128 eine leitfähige Schicht 134 gebildet. Auf der zweiten Ober-, fläche 132 des Plättchens 128 ist in einem ersten Bereich eine Verbindungsschicht 136 gebildet, sowie in einem zweiten Bereich ein leitfähiger Abschnitt 138. Ferner ist eine Durchkontaktierung 140 in dem Plättchen 128 gebildet, um die leitfähige Schicht 134 mit dem leitfähigen Abschnitt 138 leitend zu verbinden. Gemäß einem bevorzugten Ausführungsbeispiel ist der leitfähige Abschnitt 138 des Plättchens 128 abmessungsmäßig so gewählt, dass dieser in etwa den Abmessungen des Kontakts 108/114 des Bauteils entspricht. Das Plättchen 128 wird auf die in Fig. 3 gezeigte Art und Weise auf dem Bauteil angeordnet, so dass der leitfähige Abschnitt 138 mit dem Kontaktbereich 108/114 in Verbindung ist, wobei eine mechanische Verbindung zwischen Bauteil und Plättchen 128 über die Verbindungsschicht 136 herbeigeführt wird. Ähnlich wie in Fig. 2, wird hierdurch eine vergrößerte erste Anschlussfläche 134 des Bauelements erreicht.

Wie oben beschrieben wurde, wurde gemäß Fig. 3 die anhand der Fig. 2 beschriebene spezielle Ausführungsform der Verwendung der Dielektrikumsschicht 118 durch ein entsprechend präpariertes Keramikplättchen 128 ersetzt. Auf der nach au-ßen gewandten Seite 130 ist die ganzflächige Metallisierung 134 vorgesehen. Die Durchkontaktierung 140 führt an der vorbestimmten Position von der ganzflächigen Metallisierung 134 auf der "Außenseite" zu der "Innenseite" 132, die die Teilflächen-Metallisierung 138 aufweist, die vorzugsweise um die Durchkontaktierung angeordnet wurde. Die metallisierte Teilfläche 138 der Innenseite ist hier vorzugsweise deckungsgleich mit der Kontaktfläche 108/114 des Sensorelements. Der Sensor und das Plättchen werden mittels der Fügeschicht 136 oder durch eine ansonsten geeignete Art und Weise zusammengefügt, so dass sich eine feste mechanische Verbindung zwischen den beiden Elementen ergibt und gleichzeitig eine stabile elektrische Verbindung der Kontaktfläche 108/114 mit der inneren Metallisierung 138 des Keramikplättchens 128 einstellt.

Als eine weitere Alternative kann die Durchkontaktierung für eine Verbindung zur Rückseite durch eine Verbindung über eine Außenkante ersetzt werden, wobei dann das Loch für die Durchkontaktierung entfallen kann. Fig. 4 zeigt ein Bauelement gemäß diesem Ausführungsbeispiel, bei dem, ähnlich wie in Fig. 3, auf der Oberseite ein Keramikplättchen 128 vorgesehen ist. Anders als in Fig. 3 ist hier jedoch die nach innen gewandte Oberfläche 132 vollständig mit der Verbindungsschicht 136 bedeckt. Somit ist auch kein leitfähiger Bereich 138 und keine Durchkontaktierung 140 vorgesehen. Wie in Fig. 4 ferner zu erkennen ist, umfaßt das Bauteil auch keine Durchkontaktierung, wie in den Figuren 2 und 3 gezeigt ist.

Zur Verbindung des ersten Kontakts 106/112 mit der rückseitigen Anschlussfläche 126 ist eine leitfähige Schicht 142 vorgesehen, die sich von dem ersten Kontakt 106/112 über eine die Oberseite 102 und die Unterseite 124 des Substrats verbindende Seitenfläche 144 zu der leitfähigen Schicht 126 erstreckt. Auf ähnliche Weise ist der zweite Kontakt 108/114 mit der oberen Anschlussfläche 134 verbunden, nämlich über eine weitere leitfähige Schicht 146, die sich ausgehend von dem zweiten Kontakt 108/114 über eine die Oberflächen 132 und 134 verbindende Seitenfläche 147 des Plättchens 128 zu der leitfähigen Schicht 134 erstreckt.

Hinsichtlich der Fig. 4 wird darauf hingewiesen, dass hier für die Vergrößerung der oberen Anschlussfläche auch der in Fig.3 gezeigte Ansatz herangezogen werden kann, nämlich die Verwendung des Plättchens mit Durchkontaktierung 140. In diesem Fall werden nur der Kontakt 106/112 über die leitfähige Schicht 144 zur unteren leitfähigen Schicht 126 gebildet. Alternativ ist es ebenso möglich, die untere Schicht 126 über die Durchkontaktierung 122 zu kontaktieren, und nur den zweiten Kontakt 108/114 über die Schicht 146 über die Außenseite mit der oberen Schicht 134 zu kontaktieren.

Ferner kann es in Situationen, in denen lediglich die Bereitstellung der Anschlussflächen auf gegenüberliegenden Hauptoberflächen wünschenswert ist, ausreichend sein, nur den ersten Kontakt 106/112 auf die Rückseite 124 des Substrats 100 zu führen, und hier mit einer leitfähigen Schicht beliebiger Größe, also einer Schicht, die nicht notwendiger Weise die gesamte untere Oberfläche des Substrats 100 bedecken muß, zu verbinden. In diesem Fall kann der zweite Kontakt 108/114 so bleiben wie er ursprünglich ist, d.h., die oben beschriebenen Schritte betreffend die Verbindung zu einer Anschlussfläche 134 werden in diesem Fall nicht durchgeführt.

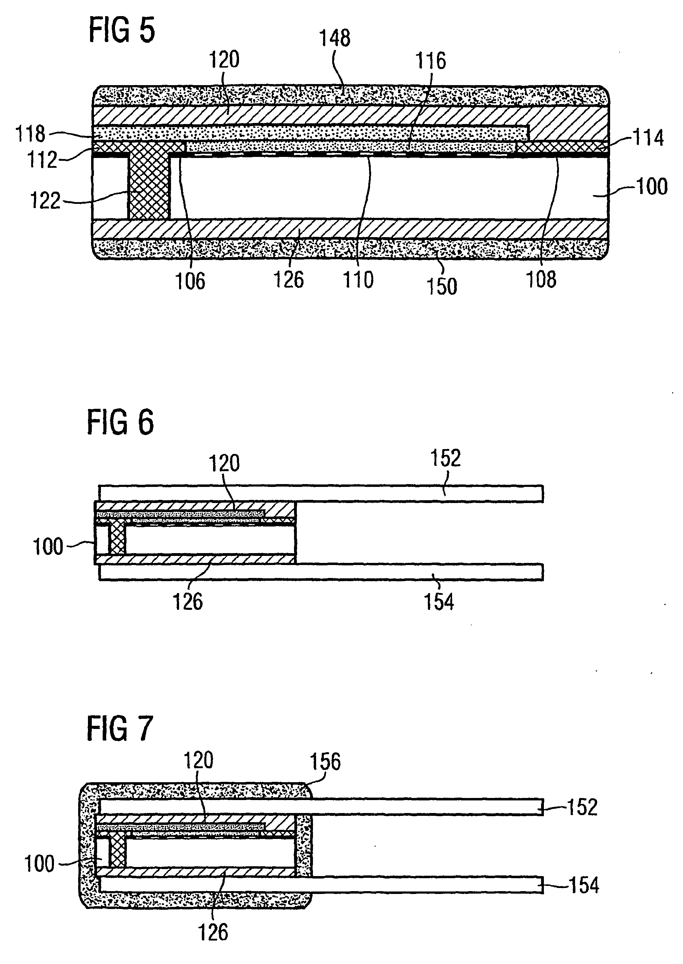

Für die Weiterverarbeitung werden die anhand der Figuren 2 bis 4 beschriebenen Bauelemente/Sensoren mit einer weiteren Metallisierungsschicht versehen. Fig. 5 zeigt ein Bauelement, das anhand der Fig. 2 beschrieben wurde, diese weiteren Metallisierungsschichten 148 und 150. Die Metallisierungsschicht 148 ist auf der oberen leitfähigen Anschlussfläche 120 angeordnet, und die Metallisierungsschicht 150 ist auf der unteren leitfähigen Anschlussfläche 126 angeordnet. Diese Metallisierungsschichten sind beispielsweise Lötzinnschichten für das Anlöten von Anschlussdrähten oder dünne Goldschichten, die als Schweißhilfe dienen, um so die Sensorchips mit Anschlussdrähten, Kabeln oder ähnlichem verbinden zu können.

Diese weitergehende Verbindung mit Anschlussdrähten ist schematisch in Fig. 6 gezeigt, in der ein erster Anschlussdraht 152 und ein zweiter Anschlussdraht 154 gezeigt sind, wobei der Anschlussdraht 152 an der Anschlussfläche 120 befestigt ist, und der Anschlussdraht 154 an der Anschlussfläche 126 befestigt ist. Abhängig von den Anwendungsfällen werden die Drähte bei höheren Einsatztemperaturen angeschweißt und bei niedrigeren Anwendungstemperaturen an die Verbindung der Anschlussdrähte mit dem Bauelement angelötet.

Zusätzlich kann das Bauelement und die Anschlussdrähte 152, 154 im Bereich deren Befestigung an demselben mit einer Umhüllung versehen sein, wie dies in Fig. 7 schematisch bei 156 gezeigt ist. Für Anwendungsfälle bei höheren Einsatztemperaturen wird als Umhüllung 156 eine Glasur oder ein geeignetes keramisches Material verwendet, was eine mechanische Verfestigung herbeiführt sowie zusätzlichen chemischen Schutz bietet. Für niedrigere Anwendungstemperaturen kann eine eventuell vorgesehene Umhüllung aus einem Polymermaterial, z.B. Epoxydharz, bestehen. Ferner können auch Schichtkombinationen der genannten Materialien für die Umhüllung verwendet werden.

Die oben beschriebenen Bauelement werden vorzugsweise auf Waferebene gefertigt, so dass das Bereitstellen des -Bauteils das Bereitstellen eines Wafers mit einer Mehrzahl der Bauteile umfaßt. Die oben genannten Schichten werden dann auf Waferebene erzeugt, wobei die Bauelemente zum Abschluss vereinzelt werden.

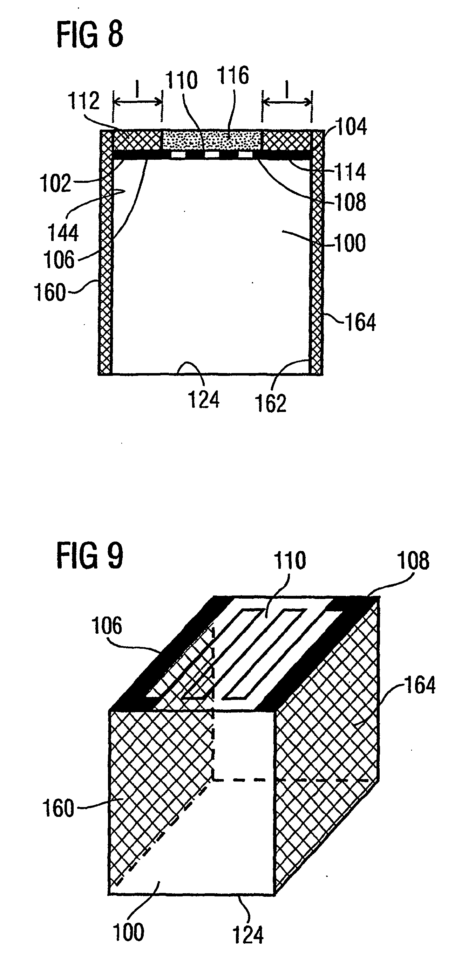

Anhand der Fig. 8 wird nun ein Bauelement gemäß einem vierten Ausführungsbeispiel der vorliegenden Erfindung beschrieben. Anders als bei den oben beschriebenen Ausführungsbeispielen werden hier die leitfähigen Schichten, die die Anschlussflächen bilden, nicht auf den Hauptoberflächen des Sensor-Chips angeordnet, sondern auf den die Hauptoberflächen verbindenden Seitenflächen. In diesem Fall ist eine Dicke des Substrats des Bauteils größer gewählt als eine maximale Abmessung der Kontakte, wodurch eine vergrößerte Anschlussfläche - verglichen mit den Kontakten - erhalten wird.

Fig. 8 zeigt den Sensor-Chip mit dem Substrat 100. Wie zu erkennen ist, ist die Dicke des Substrats 100 größer als eine Ausdehnung 1 der Kontakte 106/112 bzw. 108/114. Eine erste leitfähige Schicht 160 ist als erste Anschlussfläche des Bauelements auf der ersten Seitenfläche 144, die die erste Oberfläche 102 und die zweite Oberfläche 124 verbindet, gebildet. Auf einer zweiten Seitenfläche 162, die die erste Oberfläche 102 und die zweite Oberfläche 124 verbindet, ist eine zweite leitfähige Schicht 164 als zweite Anschlussfläche des Bauelements gebildet.

Fig. 9 ist eine isometrische Darstellung des Bauelements aus Fig. 8.

Die Herstellung der anhand der Fig. 8 und 9 beschriebenen Bauelemente erfolgt vorzugsweise auf Waferebene, wobei dann auf einem Wafer eine Mehrzahl der Bauteile bereitgestellt wird. Um die leitfähigen Schichten 160, 164 zu erzeugen, werden Sägeschnitte in den Wafer eingebracht, um Vertiefungen zwischen den Elementen zu erzeugen. In diese Sägeschnitte wird ein leitfähiges Material eingebracht. Zum Abschluss werden die Bauelemente vereinzelt, z.B. durch Sägen, Brechen, etc.

Die anhand der Fig. 8 und 9 beschrieben Bauelemente können ferner entsprechend den Fig. 6 und 7 weiter verarbeitet werden.

Obwohl oben bevorzugte Ausführungsbeispiele beschrieben wurden, die die Kontakte an gegenüberliegenden Kanten des Substrats zeigen, ist darauf hinzuweisen, dass die vorliegende Erfindung nicht auf diese Ausgestaltung beschränkt ist, sondern dass die Kontakte an beliebigen Positionen auf der ersten Oberfläche angeordnet sein können, z.B. auch nebeneinander.

Obwohl bevorzugte Ausführungsbeispiele betreffend den Herstellungsprozess beschrieben wurden, wird darauf hingewiesen, dass die vorliegende Erfindung nicht auf die angegebene Reihenfolge der Schritte in den angegebenen Ausführungsbeispielen beschränkt ist. Abhängig von den technischen Gegebenheiten können die jeweiligen Schritte auch in einer Reihenfolge ausgeführt werden, die sich von der beschriebenen unterscheidet. Insbesondere kann die zweite leitfähige Schicht vor der ersten leitfähigen Schicht gebildet werden. Ferner kann auch die Herstellung der leitfähigen Verbindung zwischen dem ersten Kontakt und der unteren Oberfläche vor oder nach dem Erzeugen der leitfähigen Schicht erfolgen.

## Patentansprüche

1. Verfahren zum Herstellen eines Temperaturmesssensors, mit folgenden Schritten:
Bereitstellen eines Keramiksubstrats (100) mit einer oberen und einer unteren Oberfläche, wobei auf der oberen Oberfläche (102) ein erster Kontakt (106, 112) und ein zweiter Kontakt (108, 114) gebildet ist, zwischen denen ein strukturierter Messfilm (110) angeordnet ist;
Erzeugen einer leitfähigen Verbindung (122, 142) zwischen dem ersten Kontakt (106, 112) auf der oberen Oberfläche (102) des Keramiksubstrats (100) und der unteren Oberfläche (124) des Keramiksubstrats (100);
Erzeugen einer ersten leitfähigen Schicht (126) als erste Anschlussfläche des Temperaturmesssensors auf der unteren Oberfläche (124) derart, dass die erste leitfähige Schicht (126) mit der leitfähigen Verbindung (122) in Kontakt ist;
Erzeugen einer isolierenden Schicht (118) auf der oberen Oberfläche (102) derart, dass der erste Kontakt (106, 112) und der Messfilm (110) von der isolierenden Schicht (118, 128) bedeckt sind, und dass der zweite Kontakt (108, 114) zumindest teilweise freiliegt; und
Erzeugen einer zweiten leitfähigen Schicht (120, 134) als zweite Anschlussfläche des Temperaturmesssensors auf der isolierenden Schicht (118, 128) derart, dass die zweite leitfähige Schicht (120) mit dem zweiten Kontakt (108, 114) in Kontakt ist.

2. Verfahren nach Anspruch 1, bei dem die Schritte des Erzeugens der isolierenden Schicht und des Erzeugens der zweiten leitfähigen Schicht folgende Schritte umfassen:
Bereitstellen eines isolierenden Plättchens (128) mit einer Abmessung, die im wesentlichen einer Abmessung des Temperaturmesssensors entspricht, wobei das Plättchen eine erste Oberfläche (130), auf der eine leitfähige Schicht (134) gebildet ist, eine zweite, der ersten Oberfläche (130) gegenüberliegende Oberfläche (132), die in einem vorbestimmten Bereich einen leitfähigen Abschnitt (138) aufweist, und eine leitfähige Durchkontaktierung (140), die die leitfähige Schicht (134) auf der ersten Oberfläche (130) des Plättchens (128) und den leitfähigen Abschnitt (138) auf der zweiten Oberfläche (132) des Plättchens (128) leitfähig verbindet, umfasst;
Aufbringen einer Verbindungsschicht (136) auf die obere Oberfläche (102) des Temperaturmesssensors und/oder auf die zweite Oberfläche (132) des Plättchens (128); und
Zusammenfügen des Plättchens (128) und des Temperaturmesssensors derart, dass der zweite Kontakt (108, 114) des Temperaturmesssensors mit dem leitfähigen Abschnitt (138) des Plättchens (128) in Kontakt ist, wodurch die leitfähige Schicht (134) auf der ersten Oberfläche (130) des Plättchens (128) die zweite Anschlussfläche des Bauelements bildet.

3. Verfahren nach Anspruch 1 oder 2, bei dem der Schritt des Bereitstellens das Erzeugen einer Durchkontaktierung (122) in dem Temperaturmesssensor umfasst, die sich von dem ersten Kontakt (106, 112) durch den Temperaturmesssensor zu der unteren Oberfläche (124) desselben erstreckt.

4. Verfahren nach Anspruch 1 oder 2, bei dem der Schritt des Erzeugens der leitfähigen Verbindung das Erzeugen einer leitfähigen Schicht (142) umfasst, die sich von dem ersten Kontakt (106, 112) des Temperaturmesssensors über eine die obere Oberfläche (102) und die untere Oberfläche (124) verbindende Seitenfläche (144) zu der ersten leitfähigen Schicht (126) auf der unteren Oberfläche (124) des Temperaturmesssensors erstreckt.

5. Verfahren nach einem der Ansprüche 1 bis 4, bei dem der Schritt des Bereitstellens das Bereitstellen eines Wafers mit einer Mehrzahl der Temperaturmesssensoren umfasst, wobei das Verfahren ferner das Vereinzeln der Temperaturmesssensoren umfasst.

6. Verfahren nach einem der Ansprüche 1 bis 5, mit folgendem Schritt:
Verbinden eines ersten Anschlussdrahtes (152) mit der ersten Anschlussfläche und eines zweiten Anschlussdrahtes (154) mit der zweiten Anschlussfläche.

7. Verfahren zum Herstellen eines Temperaturmesssensors, mit folgenden Schritten:
Bereitstellen eines Substrats (100) mit einer oberen und einer unteren Oberfläche, wobei auf der oberen Oberfläche (102) ein erster Kontakt (106, 112) und ein zweiter Kontakt (108, 114) gebildet sind, zwischen denen ein strukturierter Messfilm (110) angeordnet ist, wobei eine Dicke des Substrats (100) größer ist als eine maximale Abmessung des ersten Kontakts (106, 112) und des zweiten Kontakts (108, 114), wobei der erste Kontakt (106, 112) über eine erste Anschlussfläche (160) mit einem Anschlussdraht verbindbar ist, und wobei der zweite Kontakt (108, 114) über eine zweite Anschlussfläche (164) mit einem zweiten Anschlussdraht verbindbar ist;
Bilden der ersten Anschlussfläche (160) und der zweiten Anschlussfläche (164) auf zwei Seitenflächen (144, 162) des Substrats; und
Verbinden des ersten Anschlussdrahtes (152) mit der ersten Anschlussfläche und des zweiten Anschlussdrahtes (154) mit der zweiten Anschlussfläche.

8. Verfahren nach Anspruch 7, bei dem der Schritt des Bereitstellens das Bereitstellen eines Wafers mit einer Mehrzahl der Temperaturmesssensoren umfasst, und bei dem das Bilden der Anschlussflächen (160, 164) das Erzeugen von Sägeschnitten in dem Wafer und das Einbringen eines leitfähigen Materials in die Sägeschnitte umfasst, wobei das Verfahren ferner das Vereinzeln der Temperaturmesssensoren umfasst.

9. Verfahren nach einem der Ansprüche 6 bis 8, mit folgendem Schritt:
Erzeugen einer Umhüllung (156), die den Temperaturmesssensor und die Anschlussdrähte (152, 154) im Bereich der Verbindung mit den Anschlussflächen umgibt.

10. Verfahren nach Anspruch 9, bei dem die Anschlussdrähte (152, 154) angeschweißt oder angelötet werden und die Umhüllung (156) eine Glasur, ein keramisches Material, ein Polymermaterial oder eine Schichtkombination mehrerer derselben ist.

11. Temperaturmesssensor, mit:
einem Keramiksubstrat (100) mit einer oberen und einer unteren Oberfläche, wobei auf der oberen Oberfläche (102) ein erster Kontakt (106, 112) und ein zweiter Kontakt (108, 114) gebildet ist, zwischen denen ein strukturierter Messfilm (110) angeordnet ist;
einer leitfähigen Verbindung (122, 142) zwischen dem ersten Kontakt (106, 112) auf der oberen Oberfläche (102) des Substrats (100) und der unteren Oberfläche (124) des Substrats (100);
einer ersten leitfähigen Schicht (126) als erste Anschlussfläche des Temperaturmesssensors auf der unteren Oberfläche (124), die derart angeordnet ist, dass die erste leitfähige Schicht (126) mit der leitfähigen Verbindung (122) in Kontakt ist;
einer isolierenden Schicht (118, 128) auf der oberen Oberfläche (102), die derart angeordnet ist, dass der erste Kontakt (106, 112) und der Messfilm (110) von der isolierenden Schicht (118) bedeckt sind, und dass der zweite Kontakt (108, 114) zumindest teilweise freiliegt; und
einer zweiten leitfähigen Schicht (120, 134) als zweite Anschlussfläche des Temperaturmesssensors auf der isolierenden Schicht (118), die derart angeordnet ist, dass die zweite leitfähige Schicht (120) mit dem zweiten Kontakt (108, 114) in Kontakt ist.

12. Temperaturmesssensor nach Anspruch 11, bei dem die isolierende Schicht ein isolierendes Plättchen (128) mit einer Abmessung umfaßt, die im wesentlichen einer Abmessung des Temperaturmesssensors entspricht, wobei das Plättchen eine erste Oberfläche (130), auf der die zweite leitfähige Schicht (134) gebildet ist, eine zweite, der ersten Oberfläche (130) gegenüberliegende Oberfläche (132), die in einem vorbestimmten Bereich einen leitfähigen Abschnitt (138) aufweist, und eine leitfähige Durchkontaktierung (140), die die zweite leitfähige Schicht (134) auf der ersten Oberfläche (130) des Plättchens (128) und den leitfähigen Abschnitt (138) auf der zweiten Oberfläche (132) des Plättchens (128) leitfähig verbindet, umfasst;
wobei eine Verbindungsschicht (136) auf der oberen Oberfläche (102) des Temperaturmesssensors und/oder auf der zweiten Oberfläche (132) des Plättchens (128) vorgesehen ist; und
wobei das Plättchen (128) und der Temperaturmesssensors derart zusammengefügt sind, dass der zweite Kontakt (108, 114) des Temperaturmesssensors mit dem leitfähigen Abschnitt (138) des Plättchens (128) in Kontakt ist, wodurch die leitfähige Schicht (134) auf der ersten Oberfläche (130) des Plättchens (128) die zweite Anschlussfläche des Bauelements bildet.

13. Temperaturmesssensor mit:
einem Substrat (100) mit einer oberen und einer unteren Oberfläche, wobei auf der oberen Oberfläche (102) ein erster Kontakt (106, 112) und ein zweiter Kontakt (108, 114) gebildet sind, zwischen denen ein strukturierter Messfilm (110) angeordnet ist, wobei eine Dicke des Substrats (100) größer ist als eine maximale Abmessung des ersten Kontakts (106, 112) und des zweiten Kontakts (108, 114); und
einer ersten Anschlussfläche (160), die mit dem ersten Kontakt (106, 112) verbunden ist, und einer zweiten Anschlussfläche (164), die mit dem zweiten Kontakt (108, 114) verbunden ist;
wobei die erste Anschlussfläche (160) und die zweite Anschlussfläche (164) auf zwei Seitenflächen (144, 162) des Substrats gebildet sind; und
wobei ein erster Anschlussdraht (152) mit der ersten Anschlussfläche (160) und ein zweiter Anschlussdraht (154) mit der zweiten Anschlussfläche (164) verbunden ist.

## Claims

1. Method of producing a temperature measurement sensor, comprising:
providing a ceramic substrate (100) having upper and lower surfaces, a first contact (106, 112) and a second contact (108, 114) being formed on the upper surface (102), between which contacts a structured measurement film (110) is disposed;
producing a conductive connection (122, 142) between the first contact (106, 112) on the upper surface (102) of the ceramic substrate (100) and the lower surface (124) of the ceramic substrate (100);
producing a first conductive layer (126) as a first pad of the temperature measurement sensor on the lower surface (124) such that the first conductive layer (126) is in contact with the conductive connection (122);
producing an insulating layer (118) on the upper surface (102) such that the first contact (106, 112) and the measurement film (110) are covered by the insulating layer (118, 128), and that the second contact (108, 114) is at least partially exposed; and
producing a second conductive layer (120, 134) as a second pad of the temperature measurement sensor on the insulating layer (118, 128) such that the second conductive layer (120) is in contact with the second contact (108, 114).

2. Method as claimed in claim 1, wherein the steps of producing the insulating layer and of producing the second conductive layer include:
providing an insulating plate (128) having a dimension which substantially corresponds to a dimension of the temperature measurement sensor, the plate having a first surface (130), on which a conductive layer (134) is formed, a second surface (132) which is opposite the first surface (130) and has a conductive portion (138) in a predetermined area, and a conductive through connection (140) connecting the conductive layer (134) on the first surface (130) of the plate (128) and the conductive portion (138) on the second surface (132) of the plate (128);
depositing a connecting layer (136) onto the upper surface (102) of the temperature measurement sensor and/or onto the second surface (132) of the plate (128); and
stacking the plate (128) and the temperature measurement sensor such that the second contact (108, 114) of the temperature measurement sensor is in contact with the conductive portion (138) of the plate (128), whereby the conductive layer (134) on the first surface (130) of the plate (128) forms the second pad of the device.

3. Method as claimed in claim 1 or 2, wherein the step of providing includes producing a through connection (122) in the temperature measurement sensor, which extends from the first contact (106, 112) through the temperature measurement sensor to the lower surface (124) of same.

4. Method as claimed in claim 1 or 2, wherein the step of producing the conductive connection includes producing a conductive layer (142) extending from the first contact (106, 112) of the temperature measurement sensor across a side face (144), which connects the upper surface (102) and the lower surface (124), to the first conductive layer (126) on the lower surface (124) of the temperature measurement sensor.

5. Method as claimed in any of claims 1 to 4, wherein the step of providing includes providing a wafer having a plurality of the temperature measurement sensors, the method further including dicing the temperature measurement sensors.

6. Method as claimed in any of claims 1 to 5, comprising:
connecting a first lead wire (152) to the first pad, and a second lead wire (154) to the second pad.

7. Method of manufacturing a temperature measurement sensor, comprising:
providing a substrate (100) having upper and lower surfaces, the upper surface (102) having a first contact (106, 112) and a second contact (108, 114) formed thereon, between which a structured measurement film (110) is arranged, a thickness of the substrate (100) being larger than a maximum dimension of the first contact (106, 112) and the second contact (108, 114), the first contact (106, 112) being capable of being connected to a lead wire via a first pad (160), and the second contact (108, 114) being capable of being connected to a second lead wire via a second pad (164);
forming the first pad (160) and the second pad (164) on two side faces (144, 162) of the substrate; and
connecting the first lead wire (152) to the first pad, and the second lead wire (154) to the second pad.

8. Method as claimed in claim 7, wherein the step of providing includes providing a wafer having a plurality of the temperature measurement sensors, and wherein the step of forming the pads (160, 164) includes producing saw cuts in the wafer and introducing a conductive material into the saw cuts, the method further including dicing the temperature measurement sensors.

9. Method as claimed in any of claims 6 to 8, comprising:
producing a cladding (156) surrounding the temperature measurement sensor and the lead wires (152, 154) in the area of the connection to the pads.

10. Method as claimed in claim 9, wherein the lead wires (152, 154) are welded on or soldered on, and the cladding (156) is a glaze, a ceramic material, a polymer material or a layer combination of several of same.

11. Temperature measurement sensor, comprising:
a ceramic substrate (100) having upper and lower surfaces, the upper surface (102) having a first contact (106, 112) and a second contact (108, 114) formed thereon, between which a structured measurement film (110) is arranged;
a conductive connection (122, 142) between the first contact (106, 112) on the upper surface (102) of the substrate (100) and the lower surface (124) of the substrate (100);
a first conductive layer (126) as a first pad of the temperature measurement sensor on the lower surface (124), which is arranged such that the first conductive layer (126) is in contact with the conductive connection (122);
an insulating layer (118, 128) on the upper surface (102), which is arranged such that the first contact (106, 112) and the measurement film (110) are covered by the insulating layer (118), and that the second contact (108, 114) is at least partially exposed; and
a second conductive layer (120, 134) as the second pad of the temperature measurement sensor on the insulating layer (118), which is arranged such that the second conductive layer (120) is in contact with the second contact (108, 114).

12. Temperature measurement sensor as claimed in claim 11, wherein the insulating layer includes an insulating plate (128) having a dimension which substantially corresponds to a dimension of the temperature measurement sensor, the plate having a first surface (130), on which the second conductive layer (134) is formed, a second surface (132) which is opposite the first surface (130) and has a conductive portion (138) in a predetermined area, and a conductive through connection (140) connecting the second conductive layer (134) on the first surface (130) of the plate (128) and the conductive portion (138) on the second surface (132) of the plate (128);
wherein a connecting layer (136) is provided on the upper surface (102) of the temperature measurement sensor and/or on the second surface (132) of the plate (128); and
the plate (128) and the temperature measurement sensor being stacked such that the second contact (108, 114) of the temperature measurement sensor is in contact with the conductive portion (138) of the plate (128), whereby the conductive layer (134) on the first surface (130) of the plate (128) forms the second pad of the device.

13. Temperature measurement sensor comprising:
a substrate (100) having upper and lower surfaces, the upper surface (102) having a first contact (106, 112) and a second contact (108, 114) formed thereon, between which a structured measurement film (110) is arranged, a thickness of the substrate (100) being larger than a maximum dimension of the first contact (106, 112) and the second contact (108, 114); and
a first pad (160) connected to the first contact (106, 112), and a second pad (164) connected to the second contact (108, 114);
wherein the first pad (160) and the second pad (164) are formed on two side faces (144, 162) of the substrate; and
wherein a first lead wire (152) is connected to the first pad (160), and a second lead wire (154) is connected to the second pad (164).

## Revendications

1. Procédé de fabrication d'un capteur de mesure de température, aux étapes suivantes consistant à:
préparer un substrat en céramique (100) avec une surface supérieure et une surface inférieure, sur la surface supérieure (102) étant formés un premier contact (106, 112) et un deuxième contact (108, 114) entre lesquels est disposé un film de mesure structuré (110);
générer une connexion conductrice (122, 142) entre le premier contact (106, 112) sur la surface supérieure (102) du substrat en céramique (100) et la surface inférieure (124) du substrat en céramique (100);
générer une première couche conductrice (126) comme première face de raccordement du capteur de mesure de température sur la surface inférieure (124), de sorte que la première couche conductrice (126) soit en contact avec la connexion conductrice (122);
générer une couche isolante (118) sur la surface supérieure (102), de sorte que le premier contact (106, 112) et le film de mesure (110) soient recouverts par la couche isolante (118, 128), et que le deuxième contact (108, 114) soit au moins partiellement dégagé; et
générer une deuxième couche conductrice (120, 134) comme deuxième face de raccordement du capteur de mesure de température sur la couche isolante (118, 128), de sorte que la deuxième couche conductrice (120) soit en contact avec le deuxième contact (108, 114).

2. Procédé selon la revendication 1, dans lequel les étapes consistant à générer la couche isolante et à générer la deuxième couche conductrice comprennent les étapes suivantes consistant à:
préparer une plaquette isolante (128) de dimension correspondant substantiellement à une dimension du capteur de mesure de température, la plaquette comprenant une première surface (130) sur laquelle est formée une couche conductrice (134), une deuxième surface (132), opposée à la première surface (130), présentant un segment conducteur (138) dans une zone prédéterminée, et une connexion transversale conductrice (140) reliant de manière conductrice la couche conductrice (134) sur la première surface (130) de la plaquette (128) et le segment conducteur (138) sur la deuxième surface (132) de la plaquette (128);
appliquer une couche de connexion (136) sur la surface supérieure (102) du capteur de mesure de température et/ou sur la deuxième surface (132) de la plaquette (128); et
assembler la plaquette (128) et le capteur de mesure de température de sorte que le deuxième contact (108, 114) du capteur de mesure de température soit en contact avec le segment conducteur (138) de la plaquette (128), d'où la couche conductrice (134) forme sur la première surface (130) de la plaquette (128) la deuxième face de raccordement du composant.

3. Procédé selon la revendication 1 ou 2, dans lequel l'étape consistant à préparer comprend la génération d'une connexion transversale (122) dans le capteur de mesure de température qui s'étend du premier contact (106, 112), à travers le capteur de mesure de température, vers la surface inférieure (124) de ce dernier.

4. Procédé selon la revendication 1 ou 2, dans lequel l'étape consistant à générer la connexion conductrice comprend la génération d'une couche conductrice (142) qui s'étend du premier contact (106, 112) du capteur de mesure de température, par l'intermédiaire d'une face latérale (144) reliant la surface supérieure (102) et la surface inférieure (124), vers la couche conductrice (126) sur la surface inférieure (124) du capteur de mesure de température.

5. Procédé selon l'une des revendications 1 à 4, dans lequel l'étape consistant à préparer comprend la préparation d'une plaquette avec une pluralité de capteurs de mesure de température, le procédé comprenant par ailleurs la séparation des capteurs de mesure de température.

6. Procédé selon l'une des revendications 1 à 5, avec l'étape suivante consistant à:
assembler un premier fil de raccordement (152) avec la première face de raccordement et un deuxième fil de raccordement (154) avec la deuxième face de raccordement.

7. Procédé de fabrication d'un capteur de mesure de température, aux étapes suivantes consistant à:
préparer un substrat (100) avec une surface supérieure et une surface inférieure, sur la surface supérieure (102) étant formés un premier contact (106, 112) et un deuxième contact (108, 114) entre lesquels est disposé un film de mesure structuré (110), une épaisseur du substrat (100) étant supérieure à une dimension maximale du premier contact (106, 112) et du deuxième contact (108, 114), le premier contact (106, 112) pouvant être relié, par l'intermédiaire d'une première face de raccordement (160), à un fil de raccordement, et le deuxième contact (108, 114) pouvant être relié, par l'intermédiaire d'une deuxième face de raccordement (164), à un deuxième fil de raccordement;
former la première face de raccordement (160) et la deuxième face de raccordement (164) sur deux faces latérales (144, 162) du substrat; et
assembler le premier fil de raccordement (152) avec la première face de raccordement et le deuxième fil de raccordement (154) avec la deuxième face de raccordement.

8. Procédé selon la revendication 7, dans lequel l'étape consistant à préparer comprend la préparation d'une plaquette avec une pluralité de capteurs de mesure de température, et dans lequel la formation des faces de raccordement (160, 164) comprend la génération d'entailles de scie dans la plaquette et l'introduction d'un matériau conducteur dans les entailles de scie, le procédé comprenant par ailleurs la séparation des capteurs de mesure de température.

9. Procédé selon l'une des revendications 6 à 8, avec l'étape suivante consistant à:
générer une enveloppe (156) entourant le capteur de mesure de température et les fils de raccordement (152, 154) à l'endroit de l'assemblage avec les faces de raccordement.

10. Procédé selon la revendication 9, dans lequel les fils de raccordement (152, 154) sont soudés ou brasés et l'enveloppe (156) est une vitrification, un matériau céramique, un matériau polymère ou une combinaison de couches de plusieurs de ces derniers.

11. Capteur de mesure de température, avec:
un substrat en céramique (100) avec une surface supérieure et une surface inférieure, sur la surface supérieure (102) étant formés un premier contact (106, 112) et un deuxième contact (108, 114) entre lesquels est disposé un film de mesure structuré (110);
une connexion conductrice (122, 142) entre le premier contact (106, 112) sur la surface supérieure (102) du substrat (100) et la surface inférieur (124) du substrat (100);
une première couche conductrice (126) comme première face de raccordement du capteur de mesure de température sur la surface inférieure (124), disposée de sorte que la première couche conductrice (126) soit en contact avec la connexion conductrice (122);
une couche isolante (118) sur la surface supérieure (102), disposée de sorte que le premier contact (106, 112) et le film de mesure (110) soient recouverts par la couche isolante (118, 128), et que le deuxième contact (108, 114) soit au moins partiellement dégagé; et
une deuxième couche conductrice (120, 134) comme deuxième face de raccordement du capteur de mesure de température sur la couche isolante (118, 128), disposée de sorte que la deuxième couche conductrice (120) soit en contact avec le deuxième contact (108, 114).

12. Capteur de mesure de température selon la revendication 11, dans lequel la couche isolante comprend une plaquette isolante (128) avec une dimension correspondant sensiblement à une dimension du capteur de mesure de température, la plaquette comprenant une première surface (130) sur laquelle est formée la deuxième couche conductrice (134), une deuxième surface (132), opposée à la première surface (130), présentant un segment conducteur (138) dans une zone prédéterminée, et une connexion transversale conductrice (140) reliant de manière conductrice la deuxième couche conductrice (134) sur la première surface (130) de la plaquette (128) et le segment conducteur (138) sur la deuxième surface (132) de la plaquette (128);
une couche d'assemblage (136) étant prévue sur la surface supérieure (102) du capteur de mesure de température et/ou sur la deuxième surface (132) de la plaquette (128); et
la plaquette (128) et le capteur de mesure de température étant assemblés de sorte que le deuxième contact (108, 114) du capteur de mesure de température soit en contact avec le segment conducteur (138) de la plaquette (128), la couche conductrice (134) sur la première surface (130) de la plaquette (128) formant la deuxième face de raccordement du composant.

13. Capteur de mesure de température, avec:
un substrat (100) avec une surface supérieure et une surface inférieure, sur la surface supérieure (102) étant formés un premier contact (106, 112) et un deuxième contact (108, 114) entre lesquels est disposé un film de mesure structuré (110), une épaisseur du substrat (100) étant supérieure à une dimension maximale du premier contact (106, 112) et du deuxième contact (108, 114), et
une première face de raccordement (160) reliée au premier contact (106, 112), et une deuxième face de raccordement (164) reliée au deuxième contact (108, 114);
la première face de raccordement (160) et la deuxième face de raccordement (164) étant formées sur deux faces latérales (144, 162) du substrat; et
un premier fil de raccordement (152) étant assemblé avec la première face de raccordement (160) et un deuxième fil de raccordement (154) avec la deuxième face de raccordement (164).
